# EUROPÄISCHE PATENTANMELDUNG

(11) **EP 4 640 425 A1**
(43) Veröffentlichungstag der Anmeldung: **29.10.2025**
(21) Anmeldenummer: 25162428.4
(22) Anmeldetag: 07.03.2025
(51) Int. Cl.: B32B 7/00, B25J 11/00, B25J 15/00, B25J 17/02

(54) **ADAPTER ZUR BEFESTIGUNG EINER ANDRÜCKROLLE AN EINEM ROBOTERARM**

(30) Priorität: 23.04.2024 DE 102024203802
(71) Anmelder: VOLKSWAGEN AG, 38440 Wolfsburg (DE)
(72) Erfinder: Mechler, Hannes, 38440 Wolfsburg (DE); Toro Ramos, Juan Mauricio, 38440 Wolfsburg (DE); Fuchs, Daniel, 38440 Wolfsburg (DE); Müller, Sergius, 38440 Wolfsburg (DE); Fiedler, Maximilian, 38440 Wolfsburg (DE)

(57) **Zusammenfassung**

Die Erfindung betrifft einen Adapter (100) zur Befestigung einer Andrückrolle (200) an einem Roboterarm, mit
- einem Befestigungsabschnitt (110), der für die Befestigung des Adapters (100) am Roboterarm vorgesehen ist;
- einem Halterungsabschnitt (120), der zur Halterung der Andrückrolle (200) am Adapter (100) vorgesehen ist; und
- einem Verbindungsabschnitt (130), der den Halterungsabschnitt (120) und den Befestigungsabschnitt (110) elastisch miteinander verbindet, wobei der Verbindungsabschnitt (130) als Blattfederanordnung ausgebildet ist, die mehrere gekrümmte und jeweils den Halterungsabschnitt (120) und den Befestigungsabschnitt (110) verbindende Blattfedern (131) umfasst.

Die Erfindung betrifft ferner einen Roboter, der mit einer Andrückrolle (200) und einem solchen Adapter (100) zur Befestigung der Andrückrolle (200) am Roboterarm ausgestattet ist.

## Beschreibung

Die Erfindung betrifft gemäß Oberbegriff des Patentanspruchs 1 eine als Adapter bezeichnete Befestigungsvorrichtung zur Befestigung einer Andrückrolle an einem Roboterarm. Die Erfindung betrifft ferner einen Roboter, der mit einer Andrückrolle und einem Adapter zur Befestigung der Andrückrolle am Roboterarm ausgestattet ist.

Verschiedene Fertigungs- oder Fügeprozesse (bspw. beim Kleben) erfordern das Andrücken einer Komponente gegen eine andere Komponente mithilfe einer Andrückrolle oder gleichbedeutend einer Andrückwalze, was auch als Anrollen bezeichnet werden kann. Ein solches Andrücken bzw. Anrollen kann automatisiert mittels Roboter, womit insbesondere ein Gelenkarmroboter gemeint ist, durchgeführt werden. Hierzu muss die Andrückrolle in geeigneter Weise am Roboterarm des Roboters befestigt werden.

Die DE 10 2009 012 239 A1 beschreibt ein Verfahren zum Applizieren einer Lackfolie auf ein Fahrzeugteil. Als Andrückeinrichtung kann eine Andrückrolle bzw. Andrückwalze verwendet werden, die von einem Roboter automatisiert gesteuert wird.

Die JP 2004-267827 A beschreibt eine Vorrichtung zum Auftragen eines schutzschichtbildenden Materials mithilfe einer robotergeführten Rolle bzw. Walze, die mittels einer Befestigungsvorrichtung elastisch am Roboterarm befestigt ist.

Der Erfindung liegt die Aufgabe zugrunde, eine verbesserte Befestigungsvorrichtung (im Weiteren als Adapter bezeichnet) zur Befestigung einer Andrückrolle bzw. -walze an einem Roboterarm anzugeben.

Die Aufgabe wird gelöst mit dem erfindungsgemäßen Adapter des Patentanspruchs 1. Mit den nebengeordneten Patentansprüchen erstreckt sich die Erfindung zum einen auf einen Roboter, insbesondere einen Gelenkarmroboter, der mit einer Andrückrolle ausgestattet ist, wobei die Andrückrolle mithilfe eines erfindungsgemäßen Adapters am Roboterarm (des Roboters) befestigt bzw. angebunden ist, und zum anderen auf eine Verwendung dieses Roboters im Kraftfahrzeugbau zum automatisierten Andrücken bzw. Anrollen von Dekorelementen, insbesondere Dekorleisten (Beplankungen) und dergleichen, vorzugsweise im äußeren Karosseriebereich, wobei das Andrücken bzw. Anrollen insbesondere kraftgeregelt erfolgt. Bevorzugt ist vorgesehen, dass die Dekorelemente verklebt werden. Vorteilhafte Weiterbildungen und Ausgestaltungen der Erfindung ergeben sich analog für alle Erfindungsgegenstände aus den abhängigen Patentansprüchen, der nachfolgenden Erfindungsbeschreibung (dies schließt ausdrücklich beispielhaft und optional beschriebene Merkmale mit ein) und den Figuren.

Der erfindungsgemäße Adapter (Befestigungsvorrichtung) zur Befestigung einer Andrückrolle an einem Roboterarm bzw. zur Anbindung einer Andrückrolle an einen Roboterarm, womit insbesondere der Arm eines Gelenkarmroboters gemeint ist, weist auf:
- einen Befestigungsabschnitt, der für die Befestigung des Adapters am Roboterarm vorgesehen (und entsprechend ausgebildet) ist;
- einen Halterungsabschnitt, der zur Halterung der Andrückrolle am Adapter, insbesondere durch direkte Befestigung der Rollenachse am Halterungsabschnitt, vorgesehen (und entsprechend ausgebildet) ist; und
- einen Verbindungsabschnitt, der den Halterungsabschnitt und den Befestigungsabschnitt elastisch (im Sinne von nicht starr), insbesondere federelastisch, miteinander verbindet, wobei dieser Verbindungsabschnitt als Blattfederanordnung ausgebildet ist, die mehrere gekrümmte und jeweils den Halterungsabschnitt und den Befestigungsabschnitt verbindende Blattfedern umfasst. Bevorzugt erfolgt die Verbindung zwischen dem Halterungsabschnitt und dem Befestigungsabschnitt nur mit den Blattfedern.

Die Blattfedern sind insbesondere als massive Flachprofile gebildet und sind durch entsprechende Formgebung gekrümmt, vorzugsweise mehrfachgekrümmt, ausgebildet. Damit ist gemeint, dass die (flachprofilartigen) Blattfedern bereits im unbelasteten Zustand nicht eben sind, sondern wenigstens eine Krümmung bzw. Biegung, insbesondere mehrere gegebenenfalls auch entgegengesetzte Krümmungen bzw. Biegungen aufweisen. Die Blattfedern können bspw. mäanderförmig oder zumindest nährungsweise S-förmig geformt sein. Die Krümmung bzw. Mehrfachkrümmung der Blattfedern, insbesondere in Verbindung mit einer Anstellung bzw. Schrägstellung von Krümmungsbögen bezüglich einer virtuellen Verbindungsachse (wie bspw. in den Figuren gezeigt), ermöglicht zum einen eine vorteilhafte Einstellung des Einfederungs- und Rückstellungsverhaltens und zum anderen eine kompakte Bauform des Adapters mit vergleichsweise kurzem Abstand zwischen dem Halterungsabschnitt und dem Befestigungsabschnitt. Die mechanischen Eigenschaften der Blattfedern sind einerseits durch das Material und andererseits durch die Formgebung gezielt auslegbar. Insbesondere sind die Blattfedern derart geformt, dass diese nur unterhalb ihrer Materialstreckgrenze belastet werden. In Bereichen mit geringer Belastung können die Blattfedern mit Einschnürungen oder Ähnlichem ausgebildet sein, um innerhalb der Blattfedern eine gleichmäßigere bzw. homogenere Spannungsverteilung zu erzielen und insbesondere das Auftreten von Spannungsspitzen in Bereichen mit höherer Belastung (dies sind insbesondere Bereiche mit starker Krümmung bzw. Biegung) zu vermeiden oder zumindest zu reduzieren.

Erfindungsgemäß sind mehrere Blattfedern (d. h. wenigstens zwei Blattfedern) vorgesehen, von denen jede den Halterungsabschnitt und den Befestigungsabschnitt miteinander verbindet. Die Blattfedern bilden eine sogenannte Blattfederanordnung, mit der eine elastische, insbesondere federelastische, Verbindung zwischen dem Halterungsabschnitt und dem Befestigungsabschnitt geschaffen und im Weiteren eine multidirektional nachgiebige Befestigung bzw. Aufhängung der Andrückrolle am Roboterarm realisiert ist. Die Blattfedern der Blattfederanordnung können sowohl identisch als auch unterschiedlich ausgebildet sein.

Das automatisierte Andrücken bzw. Anrollen mithilfe einer robotergeführten Andrückrolle erfolgt typischerweise kraftgeregelt. Bei Verwendung des erfindungsgemäßen Adapters bewirkt die Blattfederanordnung zwischen dem Halterungsabschnitt und dem Befestigungsabschnitt eine effektive Entkopplung, wodurch Störungen aufgrund spontan auftretender Kraftspitzen verhindert werden, sodass unterbrechungsfreie Andrück- bzw. Anrollvorgänge möglich sind. Selbiges gilt auch in Hinblick auf Schwingungen.

Bevorzugt ist der Adapter aus Kunststoff, insbesondere thermoplastischem Kunststoff (bspw. Polypropylen), gebildet. Der Adapter ist vorzugsweise einstückig, d. h. in einem Stück hergestellt. Ferner ist bevorzugt vorgesehen, dass der Adapter durch ein 3D-Druckverfahren (bspw. durch selektives Laserstrahlschmelzen) hergestellt ist. D. h., der Adapter ist vorzugsweise eine 3D-gedruckte Komponente. Der 3D-Druck ermöglicht eine vergleichsweise günstige Herstellung sowie auch eine hinterschnittige Geometrie.

Bevorzugt ist vorgesehen, dass sich der Halterungsabschnitt (insbesondere zusammen mit der darin gehalterten Andrückrolle) relativ zum Befestigungsabschnitt selbsttätig ausrichten bzw. zentrieren kann, was auch als Selbstausrichtung bzw. Selbstzentrierung bezeichnet werden kann. Dies gelingt insbesondere durch eine geeignete Formgebung der Blattfedern (wie insbesondere oben beschrieben) und/oder durch eine geeignete Anordnung der Blattfedern (wie insbesondere nachfolgend noch näher erläutert). Der erfindungsgemäße Adapter kann so ausgebildet sein, dass eine solche Selbstausrichtung bzw. Selbstzentrierung des Halterungsabschnitts sowohl für den unbelasteten Zustand als auch für den belasteten Zustand vorgesehen ist.

Bevorzugt ist vorgesehen, dass der Verbindungsabschnitt bzw. die Blattfederanordnung drei, vier oder fünf Blattfedern umfasst. Insbesondere ist vorgesehen, dass diese Blattfedern um eine virtuelle Verbindungsachse (zwischen dem Halterungsabschnitt und dem Befestigungsabschnitt) herum angeordnet sind, vorzugsweise mit gleichen Winkelabständen. Dies begünstigt im unbelasteten Zustand (d. h. solange kein Andrück- bzw. Anrollvorgang ausgeführt wird) und insbesondere auch im belasteten Zustand (d. h. während eines Andrück- bzw. Anrollvorgangs) eine Selbstausrichtung bzw. Selbstzentrierung des Halterungsabschnitts (insbesondere zusammen mit der darin gehalterten Andrückrolle) relativ zum Befestigungsabschnitt, womit insbesondere eine Ausrichtung bzw. Zentrierung entlang einer virtuellen Verbindungsachse gemeint ist. Die Selbstausrichtung bzw. Selbstzentrierung ist vorteilhaft für die Automatisierung und verbessert die Wiederholgenauigkeit in der Serienfertigung. Ferner wird die Wiederholbarkeit eines gewünschten Einfederungs- und/oder Rückstellungsverhaltens begünstigt.

Die Blattfedern können identisch ausgebildet und mit gleichen Winkelabständen angeordnet sein, was auch als symmetrische Auslegung bezeichnet werden kann. Es kann allerdings auch vorgesehen sein, dass die Blattfedern unterschiedlich ausgebildet und/oder mit unterschiedlichen Winkelabständen angeordnet sind, was auch als asymmetrische Auslegung bezeichnet werden kann. Durch eine asymmetrische Auslegung kann das Kipp- bzw. Abkippverhalten bei einem Andrück- bzw. Anrollvorgang beeinflusst werden. Bspw. können einzelne Blattfedern steifer, insbesondere breiter und/oder dicker, ausgebildet sein als andere Blattfedern, um dadurch einer reaktiven Kipp- bzw. Abkippbewegung des Halterungsabschnitts beim Andrück- bzw. Anrollvorgang gezielt entgegenzuwirken, ohne dass dies zu unnötigem Mehrgewicht führt.

Der Adapter kann wenigstens ein Anschlagelement aufweisen, das eigens dafür vorgesehen ist, den Bewegungsweg des Halterungsabschnitts relativ zum Befestigungsabschnitt zu begrenzen. Dies kann sowohl eine Bewegung entlang der virtuellen Verbindungsachse als auch eine Kipp- bzw. Abkippbewegung betreffen. Durch Vorgaben eines maximalen Federwegs und/oder Kippwinkels kann eine Überlastung der Blattfedern verhindert werden. Das Anschlagelement kann am Befestigungsabschnitt und/oder am Halterungsabschnitt angeordnet sein. Bevorzugt sind sowohl am Befestigungsabschnitt als auch am Halterungsabschnitt zusammenwirkende Anschlagelemente vorgesehen.

Der Adapter kann auch wenigstens eine Sensorhalterung (für wenigstens einen Sensor, bspw. einen Abstandssensor) und/oder wenigstens eine Kamerahalterung (für wenigstens eine Kamera) aufweisen, die insbesondere steif am Befestigungsabschnitt angeordnet sind. Der Sensor und/oder die Kamera kann zur Überwachung und/oder Regelung des Andrück- bzw. Anrollvorgangs verwendet werden.

Der Adapter kann auch eine Rollenabdeckung für die Andrückrolle aufweisen, die insbesondere schutzblechartig ausgebildet und vorzugsweise am Halterungsabschnitt angeordnet ist. Die Rollenabdeckung fungiert insbesondere als Unfallschutzmaßnahme.

Bevorzugt ist vorgesehen, dass das wenigstens eine Anschlagelement, die wenigstens eine Sensor- und/oder Kamerahalterung und/oder die Rollenabdeckung einstückig mit dem Adapter hergestellt, d. h. quasi integriert ausgebildet sind.

Der erfindungsgemäße Adapter weist im Weiteren folgende Vorteile auf:
- Kompakte Gestaltung möglich (d. h. nur geringer Bauraumbedarf erforderlich) und damit gute Zugänglichkeit zu betreffenden Fahrzeug- bzw. Karosseriebereichen.
- Niedriges Gewicht bzw. geringe Masse möglich (durch Formoptimierung, gegebenenfalls mit Hinterschnitten, und Verwendung von Kunststoff). Damit einhergehend sind höhere Robotergeschwindigkeiten und/oder die Verwendung kleinerer Roboter möglich.
- Günstige Herstellung, insbesondere durch einstückigen 3D-Druck.

Es versteht sich von selbst, dass der erfindungsgemäße Adapter auch für andere Roboteranwendungen, insbesondere mit Kraftregelung, einsetzbar ist, bei denen Störgrößen, insbesondere in Form von Kraftspitzen und/oder Schwingungen, problematisch sind.

Die Erfindung wird nachfolgend beispielhaft und in nicht einschränkender Weise mit Bezug auf die Figuren näher erläutert. Die in den Figuren gezeigten und/oder nachfolgend beschriebenen Merkmale können, auch unabhängig von konkreten Merkmalskombinationen, allgemeine Merkmale der Erfindung sein und die Erfindung entsprechend weiterbilden.

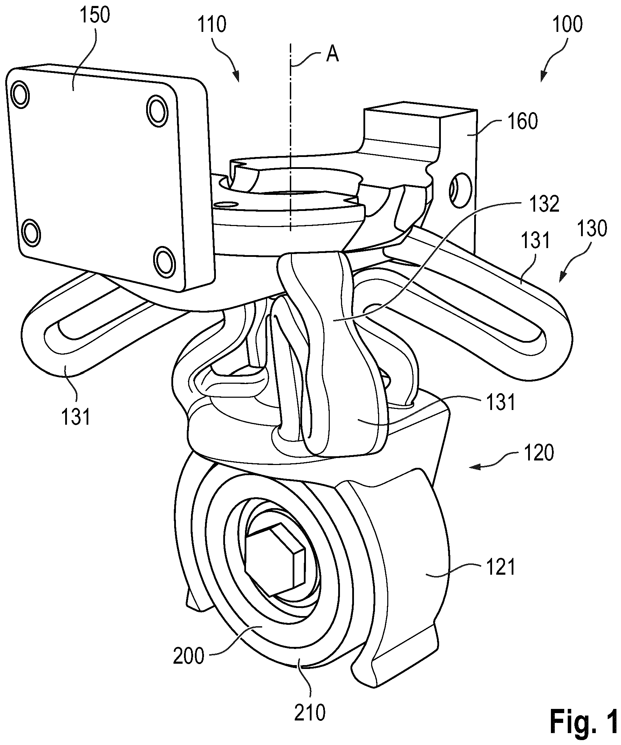

- Fig. 1: zeigt in einer perspektivischen Ansicht einen erfindungsgemäßen Adapter im unbelasteten Zustand.
- Fig. 2: zeigt den Adapter der Figur 1 in einer Seitenansicht.

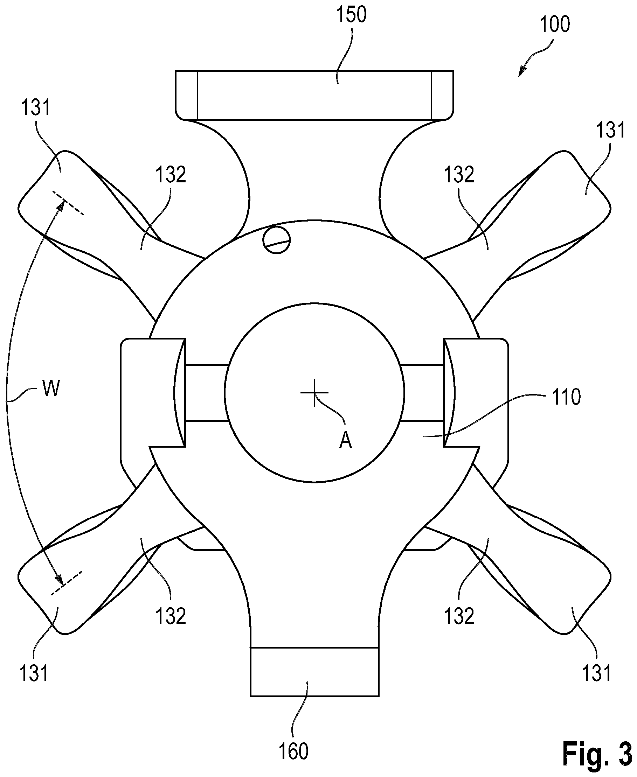

- Fig. 3: zeigt den Adapter der Figur 1 in einer Draufsicht.

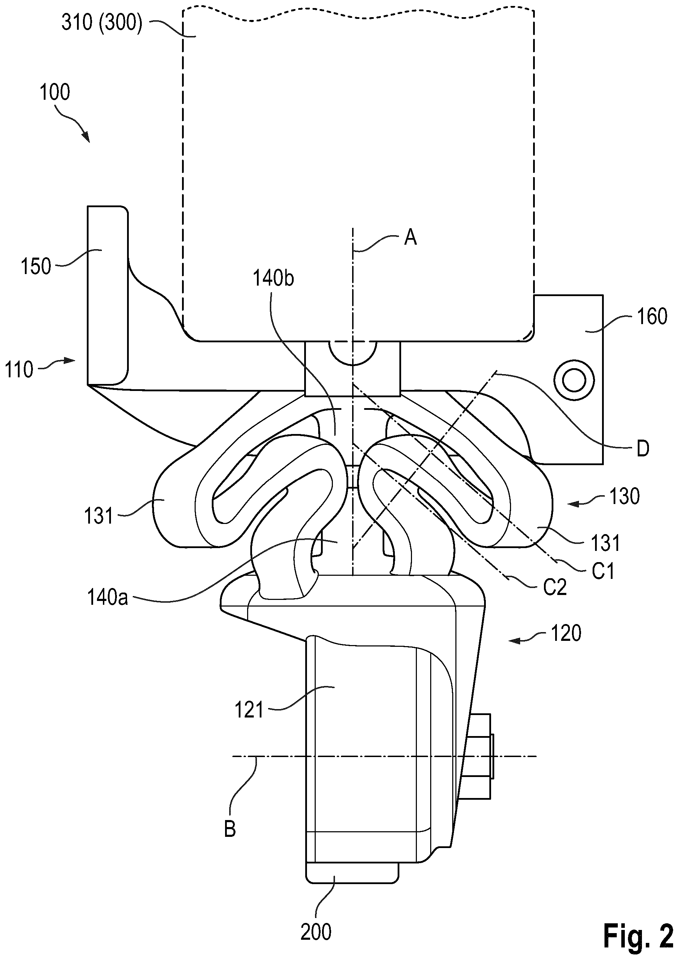

Der Adapter 100 hat eine mehrfach hinterschnittige Geometrie bzw. Bauform und ist einstückig aus einem Kunststoffmaterial hergestellt, insbesondere mittels 3D-Druck. Der Adapter 100 weist mehrere Abschnitte auf, nämlich einen flanschartigen Befestigungsabschnitt 110 für die Befestigung an einem Roboterarm 310 eines Roboters 300 (wie in Fig. 2 angedeutet), einen Halterungsabschnitt 120 zur Halterung der Andrückrolle 200 und einen Verbindungsabschnitt 130, der den Halterungsabschnitt 120 und den Befestigungsabschnitt 110 elastisch (also nicht starr, sondern nachgiebig) miteinander verbindet. Die Andrückrolle 200 ist in geeigneter Weise am Halterungsabschnitt 120 befestigt, z. B. dadurch, dass die Rollenachse mit dem Halterungsabschnitt 120 verschraubt ist. Die Andrückrolle 200 weist eine flexible und/oder dämpfende Rollenbeschichtung 210 auf. Die Andrückrolle 200 kann kugelgelagert sein.

Der Verbindungsabschnitt 130 ist als Blattfederanordnung ausgebildet, die vier gekrümmte und jeweils den Befestigungsabschnitt 110 und den Halterungsabschnitt 120 verbindende Blattfedern 131 umfasst. (Es können auch weniger oder mehr Blattfedern 131 vorgesehen sein.) In einer Umfangsrichtung um eine virtuelle Verbindungsachse A herum sind die Blattfedern 131 gleichmäßig verteilt, d. h. mit gleichen oder zumindest näherungsweise gleichen Winkelabständen W angeordnet und haben bezüglich der virtuellen Verbindungsachse A eine im Wesentlichen radiale Ausrichtung bzw. Orientierung. Die armartig bzw. armähnlich ausgebildeten Blattfedern 131 sind näherungsweise S-förmig, d. h. mit jeweils zwei Krümmungsbögen, geformt, derart, dass die Krümmungsbögen in radialer Richtung orientiert und zugleich schräg zur virtuellen Verbindungsachse A ausgerichtet sind, wobei letzteres auch als Anstellung der Blattfedern 131 bezeichnet werden kann (siehe Linien C1 und C2 in Fig. 2). Die Anstellung einer Blattfeder 131 beeinflusst deren Hauptwirkrichtung (siehe Linie D in Fig. 2). Die Blattfedern 131 weisen zudem Einschnürungen bzw. eingeschnürte Bereiche 132 auf, wie obenstehend erläutert.

Einerseits ermöglichen die Blattfedern 131 eine multidirektionale Relativbewegung zwischen dem Halterungsabschnitt 120 und dem Befestigungsabschnitt 110 während eines Andrück- bzw. Anrollvorgangs und eine damit einhergehende Entkopplung von multidirektional auftretenden Kraftspitzen und Schwingungen. Andererseits bewirken die Blattfedern 131 eine Selbstausrichtung bzw. Selbstzentrierung des Halterungsabschnitts 120 (zusammen mit der daran gehalterten Andrückrolle 200) relativ zum Befestigungsabschnitt 110, womit insbesondere eine Selbstausrichtung bzw. Selbstzentrierung entlang der virtuellen Verbindungsachse A gemeint ist. Die Selbstausrichtung bzw. Selbstzentrierung erfolgt zumindest im unbelasteten Zustand. Bei der gezeigten Formgebung und Anordnung der Blattfedern 131 kann bedingt auch im belasteten Zustand eine Selbstausrichtung bzw. Selbstzentrierung des Halterungsabschnitts 120 erfolgen. Insbesondere wird ein selbstzentriertes Einfedern (d. h. eine Federbewegung entlang der virtuellen Verbindungsachse A) unter Vermeidung oder Erschwerung einer Kipp- bzw. Abkippbewegung des Halterungsabschnitts 120 ermöglicht. Je größer die Winkel zwischen der Hauptwirkrichtung D und der virtuellen Verbindungsachse A gewählt werden, desto stärker ist der Selbstausrichtungs- bzw. Selbstzentrierungseffekt.

Der Adapter 100 weist ferner zwei zusammenwirkende Anschlagelemente 140a, 140b auf, die eine Überlastung der Blattfedern 131 verhindern, indem der maximale axiale Bewegungs- bzw. Federweg des Halterungsabschnitts 120 entlang der virtuellen Verbindungsachse A begrenzt wird. Mittels solcher oder ähnlicher Anschlagelemente kann auch eine Kipp- bzw. Abkippbewegung des Halterungsabschnitts 120 begrenzt werden, insbesondere auch richtungsabhängig. Der Adapter 100 weist außerdem eine flanschartig ausgebildete Sensorhalterung 150 sowie auch eine flanschartig ausgebildete Kamerahalterung 160 auf, die beide am Befestigungsabschnitt 110 angeordnet sind. Der Adapter 100 weist zudem eine schutzblechartig ausgebildete Rollenabdeckung 121 für die Andrückrolle 200 auf, die am Halterungsabschnitt 120 angeordnet ist.

Weitere Ausführungs- und Ausgestaltungsmöglichkeiten des erfindungsgemäßen Adapters 100 sind oben beschrieben.

### Bezugszeichenliste

- 100: Adapter (Befestigungsvorrichtung)
- 110: Befestigungsabschnitt
- 120: Halterungsabschnitt
- 121: Rollenabdeckung
- 130: Verbindungsabschnitt
- 131: Blattfeder
- 132: Einschnürung
- 140a: Anschlagelement
- 140b: Anschlagelement
- 150: Sensorhalterung
- 160: Kamerahalterung
- 200: Andrückrolle
- 210: Rollenbeschichtung
- 300: Roboter
- 310: Roboterarm
- A: virtuelle Verbindungsachse
- B: Drehachse (Andrückrolle)
- C1: Anstellung
- C2: Anstellung
- D: Hauptwirkrichtung
- W: Winkelabstand

## Patentansprüche

1. Adapter (100) zur Befestigung einer Andrückrolle (200) an einem Roboterarm (310), mit
- einem Befestigungsabschnitt (110), der für die Befestigung des Adapters (100) am Roboterarm (310) vorgesehen ist;
- einem Halterungsabschnitt (120), der zur Halterung der Andrückrolle (200) am Adapter (100) vorgesehen ist; und
- einem Verbindungsabschnitt (130), der den Halterungsabschnitt (120) und den Befestigungsabschnitt (110) elastisch miteinander verbindet;
**dadurch gekennzeichnet, dass**
der Verbindungsabschnitt (130) als Blattfederanordnung ausgebildet ist, die mehrere gekrümmte und jeweils den Halterungsabschnitt (120) und den Befestigungsabschnitt (110) verbindende Blattfedern (131) umfasst.

2. Adapter (100) nach Anspruch 1,
**dadurch gekennzeichnet, dass**
der Adapter (100), vorzugsweise einstückig, aus Kunststoff gebildet und insbesondere durch ein 3D-Druckverfahren hergestellt ist.

3. Adapter (100) nach einem der vorhergehenden Ansprüche,
**dadurch gekennzeichnet, dass**
die Blattfederanordnung drei, vier oder fünf Blattfedern (131) umfasst.

4. Adapter (100) nach Anspruch 3,
**dadurch gekennzeichnet, dass**
die Blattfedern (131) um eine virtuelle Verbindungsachse (A) herum angeordnet sind.

5. Adapter (100) nach Anspruch 3 oder 4,
**dadurch gekennzeichnet, dass**
die Blattfedern (131) unterschiedlich ausgebildet und/oder mit unterschiedlichen Winkelabständen (W) angeordnet sind.

6. Adapter (100) nach einem der vorhergehenden Ansprüche,
**dadurch gekennzeichnet, dass**
der Adapter (100) wenigstens ein Anschlagelement (140a, 140b) aufweist, das den Bewegungsweg des Halterungsabschnitts (120) relativ zum Befestigungsabschnitt (110) begrenzt.

7. Adapter (100) nach einem der vorhergehenden Ansprüche,
**dadurch gekennzeichnet, dass**
der Adapter (100) eine Sensorhalterung (150) und/oder eine Kamerahalterung (160) aufweist.

8. Adapter (100) nach einem der vorhergehenden Ansprüche,
**dadurch gekennzeichnet, dass**
der Adapter (100) eine Rollenabdeckung (121) für die Andrückrolle (200) aufweist.

9. Roboter (300), der mit einer Andrückrolle (200) ausgestattet ist, wobei die Andrückrolle (200) mithilfe eines Adapters (100) gemäß einem der vorhergehenden Ansprüche am Roboterarm (310) befestigt ist.

10. Verwendung eines Roboters (300) gemäß Anspruch 9 im Kraftfahrzeugbau zum automatisierten Andrücken von Dekorelementen.
